(19) **Europäisches Patentamt**

**European Patent Office**

**Office européen des brevets**

(11) Veröffentlichungsnummer : **0 293 824 B1**

(12) EUROPÄISCHE PATENTSCHRIFT

(45) Veröffentlichungstag der Patentschrift :
17.04.91 Patentblatt 91/16

(21) Anmeldenummer : 88108675.5

(22) Anmeldetag : 31.05.88

(51) Int. Cl.⁵ : **F16L 3/10, F16L 3/14,**
**F16L 59/12**

(54) Rohrschelle und Verfahren zur Herstellung derselben.

(30) Priorität : 03.06.87 CH 2123/87

(43) Veröffentlichungstag der Anmeldung :
07.12.88 Patentblatt 88/49

(45) Bekanntmachung des Hinweises auf die
Patenterteilung :
17.04.91 Patentblatt 91/16

(84) Benannte Vertragsstaaten :
AT BE CH DE FR GB IT LI LU NL SE

(56) Entgegenhaltungen :
DE-A- 2 516 092
DE-A- 2 854 924
DE-A- 3 248 763
DE-A- 3 726 540

(73) Patentinhaber : Korkstein AG
Industriestrasse 559
CH-5623 Boswil (CH)

(72) Erfinder : Breitenmoser, Werner
Kirschbaumstrasse 10
CH-8963 Kindhausen (CH)

(74) Vertreter : Blum, Rudolf Emil Ernst et al
c/o E. Blum & Co Patentanwälte Vorderberg 11
CH-8044 Zürich (CH)

Jouve, 18, rue Saint-Denis, 75001 PARIS

## Beschreibung

Die Erfindung betrifft eine Rohrschelle gemäss dem Oberbegriff des Patentanspruches 1 sowie ein Verfahren zur Herstellung derselben.

Eine Rohrschelle dieser Art ist aus der DE-A- 28 54 924 bekannt. Die Rohrschelle hat zwei hundertachtzig Grad umspannende Halteelemente mit zwei radial abstehenden Flanschen. Die Halteelemente sind jeweils von einem Dämmkörper so umschlossen, dass mindestens die Flansche aus dem Dämmkörper herausragen. An der Stelle der Krafteinleitung ist das Halteelement verstärkt z.B. durch eine Sechskantmutter, Verstärkungsblech.

Aus der DE-A-37 26 540 bzw. DE-A-32 48 763 sind Rohrschellen bekannt, bei denen die Halteelemente grösstenteils bzw. vollständig im Dämmkörper eingebettet sind und an der Stelle der Krafteinleitung mit einer Sechskantmutter verstärkt sind.

Diese Rohrschellen haben den Nachteil, dass vor der Herstellung des Dämmkörpers die Stelle der Krafteinleitung und die Verbindungsstellen verstärkt werden müssen und die so ausgebildeten Halteelemente aufgrund dieser Verstärkungselemente nicht vollständig vom Dämmkörper eingeschlossen sind, weil beim Schäumen im Bereich dieser Verstärkungselemente Hohlräume entstehen können.

Der Erfindung liegt die Aufgabe zugrunde, eine Rohrschelle zu schaffen, bei der die Haltelemente vollständig in den Halbschalen des Dämmkörpers eingeschlossen sind, und bei der an der Stelle der Krafteinleitung eine einfache Verbindungsanordnung für den Gewindebolzen geschaffen wird.

Diese Aufgabe wird dadurch gelöst, dass das Halteelement an der Stelle der Krafteinleitung (beim Gewindebolzen) zweiteilig ausgebildet und mit zwei einander überlappenden Abschnitten in der Halbschale eingebettet ist, und dass der Gewindebolzen mit den sich überlappenden Abschnitten verbunden ist.

Die Vorteile der Erfindung bestehen darin, dass aufgrund der Ausbildung der Halteelemente, diese vollständig eingeschäumt werden, so dass zwischen Halteelement und Dämmkörper insbesondere an den Verbindungsstellen keine Hohlräume auftreten, dass Kältebrücken vermieden werden, und dass sich durch mechanische Bearbeitung der geschäumten Halbschalen eine kostengünstige Herstellung ergibt.

Bei einer bevorzugten Ausführungsform sind die Teile des Halteelementes identisch ausgebildet. Mit dieser Massnahme sind die Halbschalen unabhängig von ihrer Lage zur Rohrleitung im wesentlichen gleich ausgebildet.

Es ist von Vorteil, wenn jeder Teil aus einem ersten und zweiten Abschnitt, die parallel zueinander liegen, und aus einem dritten Abschnitt besteht, der in einem bestimmten Winkel zu den ersten und zweiten Abschnitten liegend diese Abschnitte verbindet.

Durch die einfache Querschnittform wird die Herstellung der Teile wesentlich erleichtert und auch das Auftreten von Hohlräumen im Dämmkörper wesentlich verringert.

Ein Verfahren zur Herstellung der Rohrschelle ist erfindungsgemäss durch die Merkmale des Patentanspruches 10 gekennzeichnet.

Die Vorteile des Verfahrens bestehen darin, dass identisch ausgebildete Rohlinge in die Halbschalen eingeschäumt werden und durch die mechanische Bearbeitung der Halbschalen kostengünstige und qualitativ hochstehende Rohrschellen hergestellt werden können.

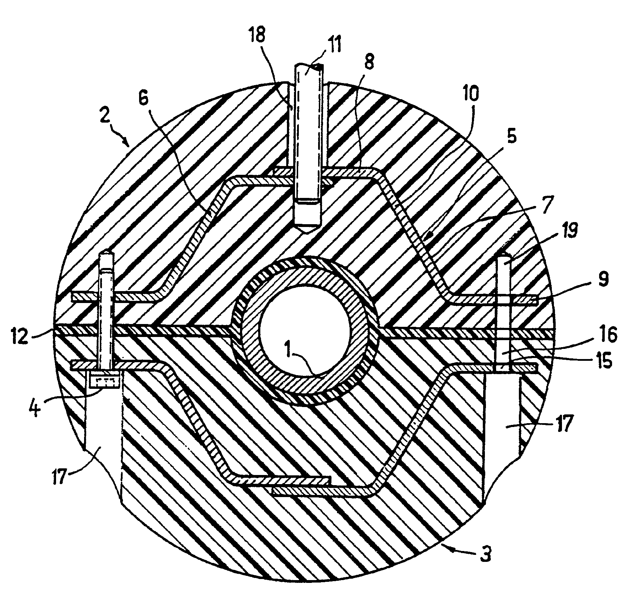

Im folgenden wird die Erfindung anhand der beiliegenden Zeichnung erläutert, die ein bevorzugtes Ausführungsbeispiel der erfindungsgemässen Rohrschelle im Querschnitt und teilweise montierten Zustand zeigt.

In der Figur ist die Rohrschelle in einem teilweise an einem Rohr 1 montierten Zustand dargestellt. Die Rohrschelle hat zwei Halbschalen 2, 3, die durch zwei Innensechskantschrauben 4 miteinander verbunden sind, wobei in der Figur nur eine Schraube 4 dargestellt ist. In jeder Halbschale 2, 3 ist ein zweiteiliges Halteelement 5 eingebettet, deren Teile 6, 7 identisch ausgebildet sind. Jeder Teil 6, 7 hat parallel zueinanderliegende erste und zweite Abschnitte 8, 9 und einen die Abschnitte 8, 9 verbindenden dritten Abschnitt 10. Die Teile 6, 7 sind so in der Halbschale 2, 3 angeordnet, dass sich die ersten Abschnitte 8 an der Stelle der Krafteinleitung einander überlappen und das Halteelement 5 etwa hutförmig verläuft. An der Stelle der Krafteinleitung ist ein Gewindebolzen 11 zum Aufhängen der Rohrschelle in die ersten Abschnitte 8 der Teile 6, 7 eingeschraubt.

Zwischen den Halbschalen 2, 3 und um die Rohrleitung 1 ist eine elastische Einlage 12 zur Schalldämmung angeordnet.

Zur Herstellung der Rohrschelle werden zwei Rohlinge verwendet, deren Querschnittsform den Teilen des Halteelementes entsprechen und die im zweiten Abschnitt eine Bohrung 15 aufweisen. Mit Hilfe dieser Bohrung werden die Rohlinge in der Form positioniert. Die beiden Rohlinge werden so eingelegt, dass diese etwa hutförmig verlaufen und die ersten Abschnitte sich einander überlappen und die zweiten Abschnitte mit der Bohrung 15 etwa parallel zur Trennfläche des Dämmkörpers liegen. Die Form wird mit Polyurethanschaum ausgeschäumt, so dass zwei Halbfabrikate entstehen, die zwei durch die Halterung erzeugte Löcher 16 aufweisen. Anschliessend werden die Halbschalen bearbeitet, wobei zwischen oberer und unterer Schale zu unterscheiden ist und ob die Rohrschelle für Einzelaufhängung oder mehrlagige Aufhängung vorgesehen ist.

Wie aus der Figur ersichtlich ist, werden in der unteren Halbschale 2 zwei Bohrungen 17, die auf die Bohrung 15 ausgerichtet ist und an der Stelle der Krafteinleitung eine weitere Bohrung 18 gebohrt. Ferner wird in die sich überlappenden ersten Abschnitte 8 eine nicht dargestellte Bohrung gebohrt, die sich in den Dämmkörper erstreckt.

In der oberen Halbschale 3 werden zwei Sacklöcher 19 gebohrt. Ferner werden die Stirnseiten der Halbschale bearbeitet. Die unbearbeiteten Flächen weisen eine Schäumhaut auf. Die Halbschalen 2, 3 werden durch Innensechskantschrauben 4 miteinander verbunden.

Die Rohrschelle wird montiert, indem man den Aufhängebolzen in die ersten Abschnitte 8 der Teile 5, 6 einschraubt

Für eine mehrlagige Aufhängung wird in der unteren Halbschale 3 zur Aufnahme eines Gewindebolzens ebenfalls eine Bohrung (nicht dargestellt) wie bei der oberen Halbschale 2 hergestellt.

**Ansprüche**

1. Rohrschelle für isolierte Rohrleitungen, welche Rohrschelle einen das aufzunehmende Rohr umschliessenden Dämmkörper, der aus zwei miteinander verbindbaren Halbschalen besteht, in denen jeweils ein Halteelement eingebettet ist und einen Gewindebolzen zur Aufhängung aufweist, der am Halteelement angreift, dadurch gekennzeichnet, dass das Halteelement (5) an der Stelle der Krafteinleitung (beim Gewindebolzen) zweiteilig ausgebildet und mit zwei einander überlappenden Abschnitten (8) in der Halbschale (2, 3) eingebettet ist und dass der Gewindebolzen (11) mit den sich überlappenden Abschnitten (8) verbunden ist.

2. Rohrschelle nach Anspruch 1, dadurch gekennzeichnet, dass beide Halteelemente (5) zweiteilig ausgebildet sind.

3. Rohrschelle nach einem der Ansprüche 1 oder 2, dadurch gekennzeichnet, dass die Teile (6, 7) des Halteelementes identisch ausgebildet sind.

4. Rohrschelle nach einem der Ansprüche 1-3, dadurch gekennzeichnet, dass jeder Teil (6, 7) aus einem ersten und zweiten Abschnitt (8, 9), die parallel zueinander liegen, und aus einem dritten Abschnitt (10) besteht, der in einem bestimmten Winkel zu den ersten und zweiten Abschnitten liegend diese Abschnitte verbindet.

5. Rohrschelle nach Anspruch 1, dadurch gekennzeichnet, dass die Halbschale (2, 3) an der Stelle der Krafteinleitung eine Bohrung (18) mit bearbeiteter Innenfläche zur Aufnahme des Aufhängebolzens (11) aufweist und dass die sich überlappenden Abschnitte (8) mit einer Gewindebohrung zum Einschrauben des Gewindebolzens (11) versehen sind.

6. Rohrschelle nach einem der Ansprüche 1-5, dadurch gekennzeichnet, dass die Stirnflächen des Dämmkörpers bearbeitet sind.

7. Rohrschelle nach einem der Ansprüche 1-6, dadurch gekennzeichnet, dass die Halbschalen (2, 3) durch ein Scharnier verbunden sind.

8. Rohrschelle nach einem der Ansprüche 1-6, dadurch gekennzeichnet, dass die Halbschalen (2, 3) durch Innensechskantschrauben (4) verbunden sind.

9. Rohrschelle nach einem der Ansprüche 1-7, dadurch gekennzeichnet, dass eine elastische Einlage (12) zur Schalldämmung an der Innenseite der Halbschalen angeordnet sind.

10. Verfahren zur Herstellung einer Rohrschelle nach Anspruch 1, dadurch gekennzeichnet, dass man für das Halteelement an der Stelle der Krafteinleitung (beim Gewindebolzen) zwei identisch ausgebildete Rohlinge durch Schäumen der Halbschale in den Dämmkörper einbettet und dass man beide Halbschalen bearbeitet, um an der Stelle der Krafteinleitung den Gewindebolzen zu montieren und die beiden Halbschalen miteinander zu verbinden.

11. Verfahren nach Anspruch 10, dadurch gekennzeichnet, dass man in beide Halbschalen zwei identisch ausgebildete Rohlinge einbettet.

**Claims**

1. Pipe saddle for insulated pipes, which pipe saddle includes an insulating body surrounding the pipe to be held and consisting of two half shells connectable to each other, into which a holding element is embedded, and which pipe saddle includes a threaded bolt for suspending, which acts upon the holding element, characterized in that the holding element (5) is formed bipartite at the location of the originating of force at the threaded bolt and is embedded into the half shell (23) with two sections (8) overlapping each other, and in that the threaded bolt (11) is connected with the sections (8) overlapping each other, and in that the threaded bolt (11) is connected with the sections (8) overlapping each other.

2. Pipe saddle of claim 1, characterized in that both holding elements (5) are formed bipartite.

3. Pipe saddle according to one of the claims 1 or 2, characterized in that the parts (6, 7) of the holding element are formed identically.

4. Pipe saddle according to one of the claims 1 to 3, characterized in that each part (6, 7) consists of a first and second section (8, 9), which are parallel to each other, and of a third section (10) connecting the first and second section and which extends at a predetermined angle relative to said first and second sections.

5. Pipe saddle of claim 1, characterized in that the half shell (2, 3) at the location of the originating of force includes a bore (18) having threaded inner surface for mounting of the suspension bolt (11), and in that the overlapping sections (8) are provided with a threaded borehole for screwing the threaded bolt (11).

6. Pipe saddle according to one of the claims 1 to 5, characterized in that the front surfaces of the insulation body are threaded.

7. Pipe saddle according to one of the claims 1 to 6, characterized in that the half shells (2, 3) are connected by a hinge.

8. Pipe saddle according to one of the claims 1 to 6, characterized in that the half shells (2, 3) are connected by screws (4) with hexagonal recessed hole.

9. Pipe saddle according to one of the claims 1 to 7, characterized in that an elastic liner (12) is arranged on the inner side of the half shells for sound reduction.

10. Method for manufacturing of a pipe saddle of claim 1, characterized in that for the holding element one embeds two identically formed blanks in the location of the origination of force at the threaded bolt by foaming, and in that one threads both half shells in order to mount the threaded bolt and to connect the half shells together at the location of origination of force.

11. Method of claim 10, characterized in that one embeds two identically formed blanks in both half shells.


**Revendications**

1. Bride pour conduits tubulaires isolés, présentant un corps isolant, qui entoure le tube à recevoir et qui est constitué de deux demi-coques mutuellement reliables dans chacune desquelles un élément de retenue est noyé, et un boulon fileté pour la suspension qui agit sur l'élément de retenue, caractérisée en ce que l'élément de retenue (5) à l'endroit de l'introduction de force (pour le boulon fileté) est réalisé en deux pièces et est, avec deux sections (8) qui se recouvrent mutuellement, noyé dans la demi-coque (2, 3) et en ce que le boulon fileté (11) est relié aux sections (8) qui se recouvrent.

2. Bride pour tuyaux suivant la revendication 1, caractérisée en ce que les deux éléments de retenue (5) sont réalisés en deux pièces.

3. Bride pour tuyaux suivant l'une des revendications 1 et 2, caractérisée en ce que les pièces (6, 7) de l'élément de retenue sont réalisées sous une forme identique.

4. Bride pour tuyaux suivant l'une des revendications 1 à 3, caractérisée en ce que chaque pièce (6, 7) est constituée d'une première et d'une deuxième sections (8, 9) qui sont situées parallèlement l'une à l'autre, et d'une troisième section (10) qui relie les première et deuxième sections en étant disposée sous un certain angle par rapport à ces dernières.

5. Bride pour tuyaux suivant la revendication 1, caractérisée en ce que la demi-coque (2, 3) présente, à l'emplacement de l'introduction de force, un alésage (18) à surface interne usinée pour recevoir le boulon de suspension (11) et en ce que les sections (8) qui se recouvrent sont pourvues d'un trou taraudé pour le vissage du boulon fileté (11).

6. Bride pour tuyaux suivant l'une des revendications 1 à 5, caractérisée en ce que les faces frontales du corps isolant sont usinées.

7. Bride pour tuyaux suivant l'une des revendications 1 à 6, caractérisée en ce que les demi-coques (2, 3) sont reliées par une charnière.

8. Bride pour tuyaux suivant l'une des revendications 1 à 6, caractérisée en ce que les demi-coques (2, 3) sont reliées par des boulons à six pans creux (4).

9. Bride pour tuyaux suivant l'une des revendications 1 à 7, caractérisée en ce qu'une pièce intercalaire élastique (12) est agencée du côté intérieur des demi-coques, pour l'isolation acoustique.

10. Procédé de fabrication d'une bride pour tuyaux suivant la revendication 1, caractérisé en ce que, pour l'élément de retenue à l'emplacement de l'introduction de force (pour le boulon fileté), on noie dans le corps isolant deux ébauches réalisées de manière identique par moussage des demi-coques et en ce qu'on usine les deux demi-coques pour monter le boulon fileté à l'emplacement de l'introduction de force et pour relier mutuellement les deux demi-coques.

11. Procédé suivant la revendication 10, caractérisé en ce qu'on noie dans les deux demi-coques deux ébauches réalisées de manière identique.